Europäisches Patentamt

European Patent Office

Office européen des brevets

(19)

(11) **EP 0 931 247 B1**

(12) **EUROPÄISCHE PATENTSCHRIFT**

(45) Veröffentlichungstag und Bekanntmachung des Hinweises auf die Patenterteilung:
**05.11.2003   Patentblatt 2003/45**

(21) Anmeldenummer: **98924289.6**

(22) Anmeldetag: **08.05.1998**

(51) Int Cl.$^7$: **G01J 3/46**, G01N 21/47

(86) Internationale Anmeldenummer:
**PCT/EP98/02699**

(87) Internationale Veröffentlichungsnummer:
**WO 98/053285 (26.11.1998 Gazette 1998/47)**

(54) **VERFAHREN ZUR FARBREZEPTBERECHNUNG PIGMENTIERTER EFFEKTFARBTÖNE**

METHOD FOR CALCULATING DYE FORMULATIONS OF PIGMENTED EFFECT DYEING TONES

PROCEDE DE CALCUL DE LA FORMULE DE PEINTURES POUR TEINTES A EFFET OBTENUES AVEC DES PIGMENTS

(84) Benannte Vertragsstaaten:
**AT BE CH CY DE DK ES FI FR GB GR IE IT LI NL PT SE**

(30) Priorität: **17.05.1997  DE 19720887**

(43) Veröffentlichungstag der Anmeldung:
**28.07.1999   Patentblatt 1999/30**

(73) Patentinhaber: **E.I. DU PONT DE NEMOURS AND COMPANY**
**Wilmington Delaware 19898 (US)**

(72) Erfinder:
• **KETTLER, Wilhelm, H.**
  **D-42105 Wuppertal (DE)**
• **KOLB, Matthias**
  **D-42111 Wuppertal (DE)**
• **KRAUSE, Hartmut**
  **D-42929 Wermelskirchen (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
| GB-A- 2 293 448 | US-A- 3 690 771 |
| US-A- 3 916 168 | US-A- 4 479 718 |
| US-A- 4 711 580 | US-A- 5 231 472 |

**Beschreibung**

Die Erfindung betrifft ein Verfahren zur Farbrezeptberechnung beliebig pigmentierter Effektfarbtöne. Das Verfahren findet Anwendung im Bereich der effektgebenden Oberflächenbeschichtung, insbesondere dann, wenn alle Pigmente ermittelt werden sollen, mit denen eine Oberflächenbeschichtung eingefärbt ist, um an Hand einer Farbtonvorlage Farbtöne nachzustellen. Das Verfahren ist jedoch auch anwendbar zur Farbrezeptkorrekturrechnung.

Die Nachstellung von Farbtönen unbekannter Pigmentierung kann als wesentliche Problemstellung aller Koloristikbereiche eines Lackunternehmens angesehen werden. Insbesondere im Bereich der Fahrzeuglackierung ist in den letzten Jahren die Pigmentpalette kontinuierlich erweitert worden. Dabei ist die Zahl der Effektfarbtöne besonders stark angestiegen. Von den Stylisten werden in wachsendem Maße Effektpigmente in beliebigen Kombinationen in Farbtöne eingearbeitet. Angesichts dieser Entwicklungen kommt der Umsetzung effizienter Methoden zur Minimierung des Aufwandes bei der Nachstellung dieser Farbtonklasse eine große wirtschaftliche Bedeutung zu.

Nahezu alle Effektpigmenttypen, wie z. B. Aluminium-, Interferenz- oder Flüssigkristallpigmente, besitzen einen zweidimensionalen Charakter mit einer lateralen Ausdehnung in der Größenordnung von 5-40 μm und einer Dicke kleiner als 5 μm. Ausgeprägte Helligkeits- und Farbeffekte können nur bei optimaler paralleler Ausrichtung der Teilchen bezüglich der Lackoberfläche erreicht werden. Die Orientierung der Plättchen ist eine Eigenschaft des jeweiligen Lacksystems, in dem diese Pigmente eingesetzt werden und sie ist abhängig von den Applikationsparametern.

Bei der Nachstellung von Effektfarbtönen unbekannter Pigmentierung müssen zur Sicherstellung der beispielsweise im Bereich der Fahrzeug-/Automobillackierung geforderten hohen Qualität eine Reihe von Randbedingungen erfüllt werden. Voraussetzung für eine qualitativ hochwertige Ausarbeitung ist die Verwendung derselben Pigmenttypen, die auch im nachzustellenden Farbmuster eingesetzt worden sind. Nur dann, wenn Typ und Teilchengrößenverteilung der eingesetzten Effektpigmente den Komponenten des Farbmusters entsprechen, ist eine exakte metameriefreie Nachstellung überhaupt möglich. Darüber hinaus ist die Topologie der plättchenförmigen Effektpigmente im applizierten Lack von gleichrangiger Bedeutung, da sie letztlich die Ausbildung bzw. Ausprägung der Helligkeits- und Farbeffekte bestimmt.

Die Nachstellung von Farbtönen unbekannter Pigmentierung im Koloristiklabor wird heute durch computergestützte Methoden der Farbrezeptberechnung unterstützt. Die Farbrezeptberechnung ist ein Werkzeug für die Pigmentierungsanalyse von Farbtönen unter Zuhilfenahme der Reflexionsspektroskopie im sichtbaren Spektralbereich und unter Verwendung eines geeigneten Strahlungstransportmodells zur Beschreibung der Lichtdiffusion in partikulären Medien und damit der meßtechnisch erfaßbaren Reflexionsspektren.

Derartige Methoden werden zum Beispiel in den Patentschriften US 5 231 472 A und US 4 711 580 beschrieben.

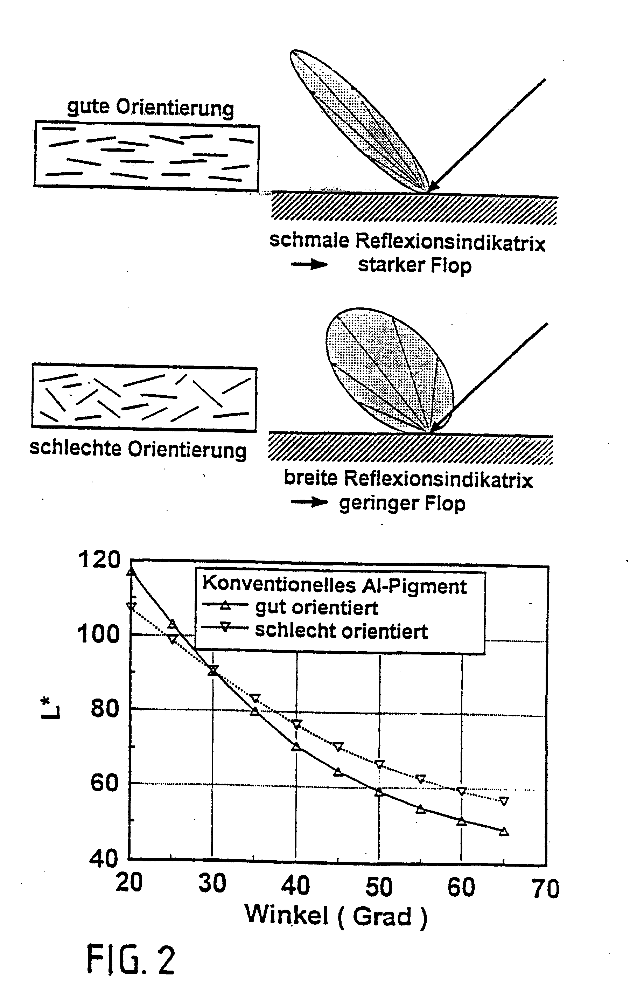

Die Qualität der berechneten Rezepte hängt von der Standardisierung aller Komponenten eines Mischlacksystems und der Konstanz der Applikationsparameter ab. Alle Abweichungen in der Topologie der Pigmente in der aktuell vorliegenden Farbtonvorlage von der Topologie der Pigmente im zur Nachstellung eingesetzten Bindemittelsystem führen zwangsläufig zu qualitativ schlechteren Simulationsergebnissen (Abb. 2). Orientieren sich die Effektpigmente im nachzustellenden Farbmuster und in dem für die Ausarbeitung verwendeten Bindemittelsystem unterschiedlich, gibt es zwei Möglichkeiten: (i) im eigenen Bindemittelsystem liegt eine schlechtere horizontale Ausrichtung der plättchenförmigen Pigmentteilchen vor, und (ii) die Orientierung im eigenen Bindemittelsystem ist besser als in dem nachzustellenden Farbton.

Im ersten Fall ist mit dem eigenen Bindemittelsystem eine exakte Nachstellung des zu bearbeitenden Farbtons nicht möglich. Bei besserer Orientierung der Teilchen im eigenen Lacksystem kann ihre Topologie durch Zugabe koloristisch unwirksamer Füllstoffe/Pigmente mit geeigneter Teilchengrößenverteilung gestört und der im nachzustellenden Farbmuster vorliegenden Topologie angepaßt werden. Da diese Füllstoffe/Pigmente aber auf Grund der mit dem Einbettungsmedium vergleichbaren Brechzahl koloristisch nicht wirksam sind, können sie im Rahmen der Färbemittelgleichung nicht wie ein Pigment behandelt und in die Farbrezeptrechnung einbezogen werden. In der herkömmlichen Farbrezeptberechnung von Effektfarbtönen kann der Einflußfaktor Topologie daher nicht berücksichtigt werden.

Aufgabe der Erfindung war es, ein Verfahren zur Farbrezeptberechnung von Effektfarbtönen bereitzustellen, welches den Einfluß der Teilchentopologie der Effektpigmente quantitativ berücksichtigt, damit die Genauigkeit der Farbrezeptberechnung erhöht und die Zahl der erforderlichen Tönschritte bei der Ausarbeitung eines Farbrezeptes wesentlich reduziert.

Die Aufgabe wird gelöst durch ein Verfahren zur Farbrezeptberechnung von Effektfarbtönen, welches dadurch gekennzeichnet ist, daß

i) für jedes einem Färbemittelsystem zugrundeliegende Pigment eine Eichstaffel erstellt wird und die zugehörigen Reflexionsfaktoren experimentell ermittelt werden,

ii) aus den gemessenen Reflexionsfaktoren für jedes dem Färbemittelsystem zugrundeliegende Pigment unter Verwendung eines Strahlungstransportmodells zur Beschreibung der Lichtdiffusion in partikulären Medien die optischen Materialparameter bestimmt werden,

iii) aus allen dem Färbesystem zugrundeliegenden plättchenförmigen Effektpigmenten und jeweils einer fixen Menge eines oder mehrerer koloristisch inerter topologiebeeinflußender Füllstoffe sogenannte Pseudopigmente gebildet werden, von denen über eine Eichstaffel ebenfalls die optischen Materialparameter bestimmt werden,

iv) und bei Vorgabe von Rezeptkomponenten bzw. Pigmenten und/oder zugehörigen Pseudopigmenten aus einem Färbemittelsystem anhand der optischen Materialparameter unter Verwendung eines geeigneten Strahlungstransportmodells zur Beschreibung der Lichtdiffusion in partikulären Medien die Reflexionsspektren eines nachzustellenden Effektfarbtons rechnerisch simuliert werden, wobei sich für jedes Pigment, jedes Pseudopigment und den topologiebeeinflussenden Füllstoff die zugehörige Menge ergibt.

Als Färbemittelsysteme sollen beliebige Systeme von Absorptions- und/oder Effektpigmenten verstanden werden. Anzahl und Auswahl der Pigmentkomponenten sind dabei keinerlei Beschränkungen unterworfen. Sie können den jeweiligen Erfordernissen beliebig angepaßt werden. Beispielsweise können einem solchen Färbemittelsystem alle Pigmentkomponenten eines standardisierten Mischlacksystems zugrunde liegen.

Als koloristisch inerte Füllstoffe sind alle Stoffe/Verbindungen zu verstehen, die einerseits koloristisch unwirksam sind, d.h. die eine sehr geringe Eigenabsorption zeigen und deren Brechzahl ähnlich der Brechzahl des Einbettungsmediums ist, und die andererseits in der Lage sind, die Orientierung (parallele Ausrichtung) der Effektpigmente in der Oberflächenbeschichtung, d.h. im applizierten Lackfilm, zu beeinflussen. Im folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 μm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente, wie z.B. Aluminium-, Eisen- oder Kupferpigmente, Interferenzpigmente, wie z.B. titandioxidbeschichteter Glimmer, eisenoxidbeschichteter Glimmer, mischoxidbeschichteter Glimmer (z.B. mit Titandioxid und $Fe_2O_3$ oder Titandioxid und $Cr_2O_3$), metalloxidbeschichtetes Aluminium, oder Flüssigkristallpigmente.

Das erfindungsgemäße Verfahren zur Farbrezeptberechnung ist anwendbar für beliebige Kombinationen von Effektpigmenten sowie für beliebige Kombinationen verschiedener Effektpigmente mit farbgebenden Absorptionspigmenten.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Eine unabdingbare Voraussetzung für das erfindungsgemäße Verfahren zur Farbrezeptberechnung ist die Kenntnis der optischen Materialparameter aller ein Mischsystem aufbauenden Mischlacke bzw. Pigmente. Zur Beschreibung der Reflexionsindikatrix von Effektfarbtönen muß ein Strahlungstransportmodell gewählt werden, mit dem die Winkelabhängigkeit des Reflexionsfaktors in hinreichender Genauigkeit beschrieben werden kann.

Ein möglicher Ansatz ist beispielsweise die azimutunabhängige Form der Strahlungstransportgleichung

$$\mu\frac{dI(x,\mu)}{dx} = -(\kappa+\sigma)\,I(x,\mu) - \frac{\sigma}{2}\int_{-1}^{1} p(\mu,\mu')\,I(x,\mu')\,d\mu' + \frac{\sigma}{4\pi}I_0\,p(\mu,-\mu_0)e^{-(\kappa+\sigma)x/\mu_0}$$

Dieses Modell verknüpft makroskopisch meßbare Größen wie die Reflexion mit pigmentoptischen Materialparametern wie dem Absorptions- ($\kappa$) und dem Streukoeffizienten ($\sigma$) sowie der Phasenfunktion ($p(\mu,\mu')$).

Es kann jedoch auch ein beliebiges allgemeingültigeres theoretisches Modell zur Beschreibung der Strahlungsdiffusion in pigmentierten Medien angewendet werden.

Die azimutunabhängige Strahlungstransportgleichung verknüpft die Intensität I(x,μ) der Strahlung in der geometrischen Tiefe x mit den optischen Materialparametern der Pigmente. Neben dem Absorptions- (κ) und dem Streukoeffizienten (σ) ist die Phasenfunktion p(μ,μ') zu bestimmen, die die Winkelabhängigkeit der Lichtstreuung an den einzelnen Pigmentteilchen beschreibt, wobei μ =cosθ gilt (θ=Streuwinkel). Alle optischen Materialparameter (Streukoeffizient, Absorptionskoeffizient, Phasenfunktion) setzen sich bei Gemischen additiv aus den mit der jeweiligen Pigmentkonzentration gewichteten Einzelbeiträgen zusammen. Die optischen Materialparameter werden aus den Reflexionsfaktoren über eine Eichstaffel experimentell ermittelt. Sind diese Materialgrößen bekannt, kann das Reflexionsverhalten beliebig pigmentierter opaker oder transparenter Lacke mit Hilfe der Strahlungstransportgleichung quantitativ für jede Meßgeometrie berechnet werden.

Die optischen Materialparameter beschreiben die Eigenschaften der Pigmente, wie sie im jeweiligen Bindemittelsystem dispergiert vorliegen. Sie sind wellenlängenabhängig und müssen für jede gewünschte Wellenlänge ermittelt werden. Im einfachsten Fall wird für jedes Pigment ein spezifischer Satz von Eichtafeln präpariert und der Reflexionsfaktor oder der Strahldichtefaktor bei verschiedenen Beleuchtungs- und Beobachtungsgeometrien im interessierenden Spektralbereich vermessen. Beispielsweise können dazu Eichtafeln hergestellt werden mit dem Vollton des Pigmentes und mit Abmischungen des reinen Pigmentes mit Schwarz oder Weiß für den Fall opaker Beschichtungen oder transparenter Beschichtungen eines Pigmentes über zwei verschiedenen Untergründen mit bekannter Reflexion, wie z.B. Weiß und Schwarz.

Da die Topologie der plättchenförmigen Effektpigmente im Lackfilm die Winkelabhängigkeit mit bestimmt, können mit dem generierten optischen Eichdatenbestand eines Mischsystems nur Farbtöne mit vergleichbarer Pigmenttopologie rechnerisch ausgearbeitet werden. Liegt im nachzustellenden Farbton eine bessere Ausrichtung der Effektpigmente vor als im Mischsystem, ist dieser nur mit Qualitätseinbußen bedingt nachstellbar. Ist dagegen die horizontale Ausrichtung der Effektpigmente im nachzustellenden Farbton schlechter als in dem Mischsystem, kann mit topologiebeeinflussenden aber koloristisch inerten Füllstoffen geeigneter Teilchengrößenverteilung die räumliche Anordnung der Effektpigmente im Mischsystem angeglichen werden. Da diese Füllstoffe wegen der mit dem Einbettungsmedium vergleichbaren Brechzahl keinen partikulären Charakter im Sinne der Strahlungstransporttheorie besitzen, können bei ihnen nicht wie bei den Pigmenten optische Materialparameter bestimmt werden.

Erfindungsgemäß werden daher im vorliegenden Verfahren zur Farbrezeptberechnung sogenannte Pseudopigmente gebildet, indem die plättchenförmigen Effektpigmente jeweils mit einer fixen Menge eines oder mehrerer topologiebeeinflussender aber ansonsten koloristisch unwirksamer Füllstoffe (siehe vorstehende Definition) gemischt werden. Von den Pseudopigmenten werden dann in analoger Vorgehensweise wie bei den anderen in einem Färbemittelsystem enthaltenen Pigmenten über eine Eichstaffel die optischen Materialparameter ermittelt.

Die Pseudopigmente sind in ihrer Topologie gegenüber den reinen Effektpigmenten erheblich gestört. In der Farbrezeptberechnung kann durch Mischen des topologisch ungestörten Effektpigmentes mit dem topologisch gestörten Pseudopigment zwischen den Topologien beider Pigmente kontinuierlich interpoliert werden. Die Rezeptrechnung liefert neben der zugehörigen Menge für jedes Pigment gleichzeitig die Zugabemenge des topologiebeeinflussenden Füllstoffes.

Darüber hinaus kann durch die Berücksichtigung der Brechung des Flop-Verhaltens der Pigmentplättchen in der Simulation sichergestellt werden, daß auch alle erforderlichen Buntkomponenten (Absorptionspigmente) in ein Rezept eingerechnet werden können. Ohne Brechung des Effektes tritt in der Farbrezeptberechnung häufig das Phänomen auf, daß eigentlich erforderliche Buntkomponenten in der Simulation in ihrer Konzentration auf Null gezogen werden, da sie die Zielgröße der Iteration (Summe der gewichteten Fehlerquadrate) verschlechtern. Diese Verschlechterung des Ergebnisses ist hier nur deshalb zu erwarten, weil die effektgebende Komponente sich im Vergleich zum nachzustellenden Farbton zu gut orientiert, was zu großen Abweichungen zwischen gemessener und berechneter Reflexionsindikatrix (Abb. 2) Anlaß gibt.

Die maximal verfügbare Menge des inerten Füllstoffes hängt bei dieser Vorgehensweise von der eingesetzten Füllstoffmenge bei der Erstellung der Eichtafeln zur Bestimmung der optischen Materialparameter für die Pseudopigmente ab. Dieser Abmischungsanteil sollte in der Weise gewählt werden, daß im Ergebnis zwischen ungestörter und gestörter Pigmentvariante in hinreichender Genauigkeit interpoliert werden kann und eine hinreichende Menge des inerten Füllstoffes in Rezepte eingerechnet werden kann. Dieser Sachverhalt kann daher nur experimentell verifiziert werden.

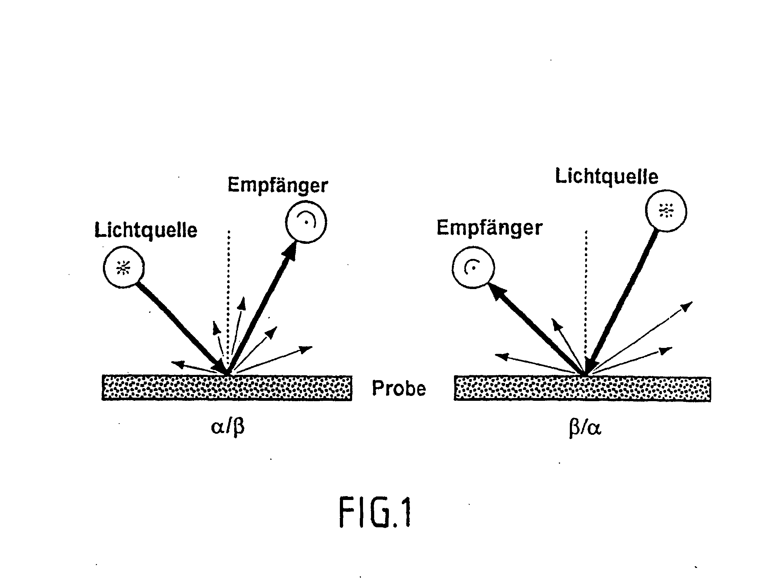

Zur instrumentellen Charakterisierung der optischen Eigenschaften gefärbter Oberflächenbeschichtungen beliebiger Pigmentierung, d.h. zur meßtechnischen Erfassung der Reflexionsfaktoren wird üblicherweise ein Goniospektralphotometer verwendet. Es kann ein stationäres oder portables Goniospektralphotometer mit symmetrischer (z.B. 0°/α bzw. α/0°) oder asymmetrischer (z.B. 45°/α bzw. α/45°) Meßgeometrie eingesetzt werden. Der abzudeckende Bereich des Beobachtungswinkels richtet sich nach der jeweils verwendeten Näherung für die Strahlungstransportgleichung. Es können sowohl Geräte mit Beleuchtungs- als auch mit Beobachtungsmodulation verwendet werden (siehe Abb. 1): Bei symmetrischer Meßgeometrie wird senkrecht zur Probenoberfläche beleuchtet (beobachtet) und bei verschiedenen Polarwinkeln θ (0° < θ <90°) beobachtet (beleuchtet). Die Apertur der Beleuchtungs- und Beobachtungsoptik sollte dabei nicht zu groß gewählt werden. Alternativ dazu kann bei Verwendung einer asymmetrischen Meßgeometrie beispielsweise unter einem Polarwinkel von 45° beleuchtet (beobachtet) werden und für die Beobachtung mehrere Winkel e aus dem Bereich 0°<ε<90° selektiert werden, wobei ε als Differenzwinkel zum Glanzwinkel zu verstehen ist (siehe Abb. 1).

Die Materialparameter werden dann durch Anpassung der Strahlungstransportgleichung oder eines allgemeingültigeren Modells im Sinne der $L_2$-Norm an diese experimentellen Daten, wie vorstehend beschrieben, ermittelt.

Das beschriebene Verfahren ist zwanglos implementierbar für alle Werkzeuge der computergestützten Pigmentierungsanalyse auf der Grundlage der Reflexionsspektroskopie wie der Kombinationsrezeptberechnung und der Korrekturrezeptberechnung. Im ersten Fall werden automatisch alle vom Anwender vorgegebenen Kombinationen von m Konstituenten eines n-komponentigen Mischsystems durchgerechnet und nach einem anwenderdefinierten Kriterium sortiert (wie z. B. der Farbdifferenz, dem Metamerie-Index oder der gewichteten Fehlerquadratsumme). Die Berücksichtigung der Topologie erfolgt dabei in Analogie zu der interaktiven Rezeptausarbeitung, bei der der Anwender die für ein Rezept zu verwendenden Pigmente selektiert. Die Gesamtzahl aller unterscheidbaren Rezepte kann durch den formelmäßigen Zusammenhang berechnet werden.

$$C_m^n = \binom{n}{m} = \frac{n!}{m!\,(n-m)!}$$

Da das ausgemischte Rezept in der Regel aus verschiedenen Gründen noch eine visuell und instrumentell erfaßbare Farbdifferenz zum Sollfarbton aufweist, wäre eine Möglichkeit zur Rezeptkorrektur mit dem Ziel einer Verminderung der Abweichungen ein wünschenswertes Hilfsmittel für den Koloristen. Hierzu sind für den Fall der Uni-Farbtöne verschiedene Methoden entwickelt worden, die alle auch auf den Bereich der Effektfarbtöne übertragen werden können. Auch auf die Korrekturrezeptberechnung kann - unabhängig von der Art des gewählten Verfahrens (z. B. Korrekturfaktor-Verfahren) - die beschriebene Methode zur Berücksichtigung der Topologie von Effektpigmenten ohne weitere Modifikation angewendet werden, da auch zur Rezeptkorrektur wieder auf den Algorithmus der Farbrezeptberechnung zurückgegriffen werden muß.

Die Verbesserung im erfindungsgemäßen Verfahren zur Farbrezeptberechnung gegenüber herkömmlichen Methoden besteht in der Verwendung der umfassenden optischen Materialparameter der Pigmente, die mit Hilfe der Strahlungstransportgleichung aus einer Eichstaffel ermittelt werden müssen, wobei der Einfluß der Teilchentopologie quantitative Berücksichtigung findet.

Die Erfindung wird im folgenden anhand des Beispiels und der Zeichnungen näher erläutert.

Die Abbildungen zeigen:

Abb. 1: Zusammenstellung der in Goniospektralphotometern eingesetzten Meßgeometrien. Links sind Systeme mit Beobachtungs- und rechts mit Beleuchtumgsmodulation dargestellt. Der Meßwinkel | ε | wird dabei auf den Spiegelwinkel bezogen. Befinden sich Lichtquelle und Empfänger auf derselben Seite des Spiegelwinkels, hat der Meßwinkel positives Vorzeichen. Wenn sich Lichtquelle und Empfänger auf verschiedenen Seiten des Spiegelwinkels befinden, erhält der Meßwinkel ein negatives Vorzeichen.

Abb. 2: Das obere Diagramm zeigt qualitativ den Einfluß der Teilchentopologie auf die Reflexionsindikatrix von Effektfarbtönen am Beispiel eines Systems mit lamellaren Al-Pigmenten als Effektgeber. Im unteren Diagramm ist die Winkelabhängigkeit der Helligkeit (L*) eines Al-Purtons für den Fall ungestörter (Δ) und gestörter (▽) Teilchentopologie dargestellt.

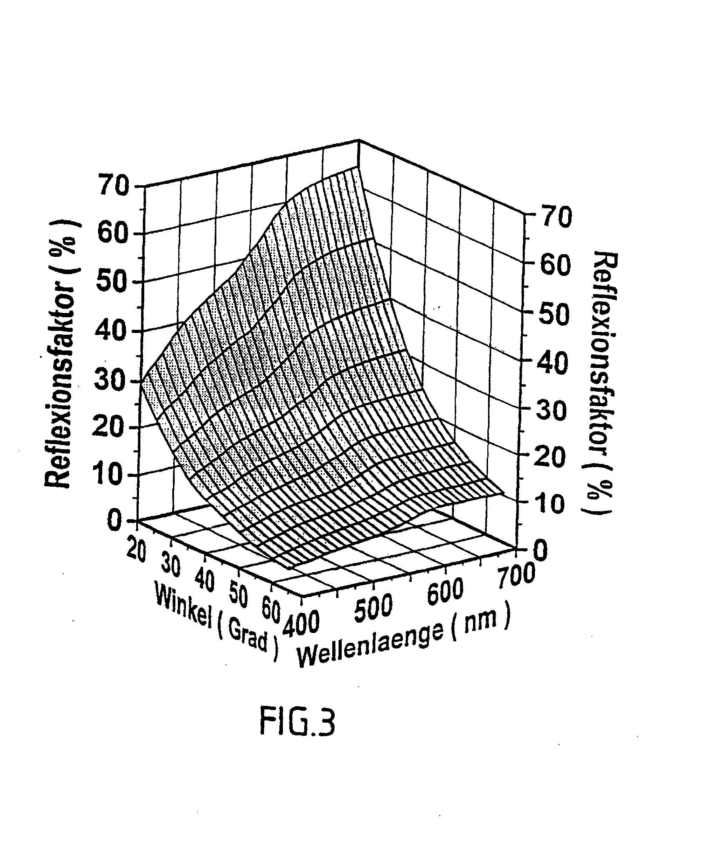

Abb. 3: Experimentell vermessene Reflexionsfläche eines beigefarbenen Effektfarbtons im sichtbaren Spektralbereich (400 nm ≤ λ ≤ 700 nm) und einem erfaßten Winkelbereich von 20° ≤ ε ≤ 65°). Dieser Farbton kann durch Kombination eines brillanten Al-Pigmentes mit einem Gelb- und einem Schwarz-Pigment nachgestellt werden.

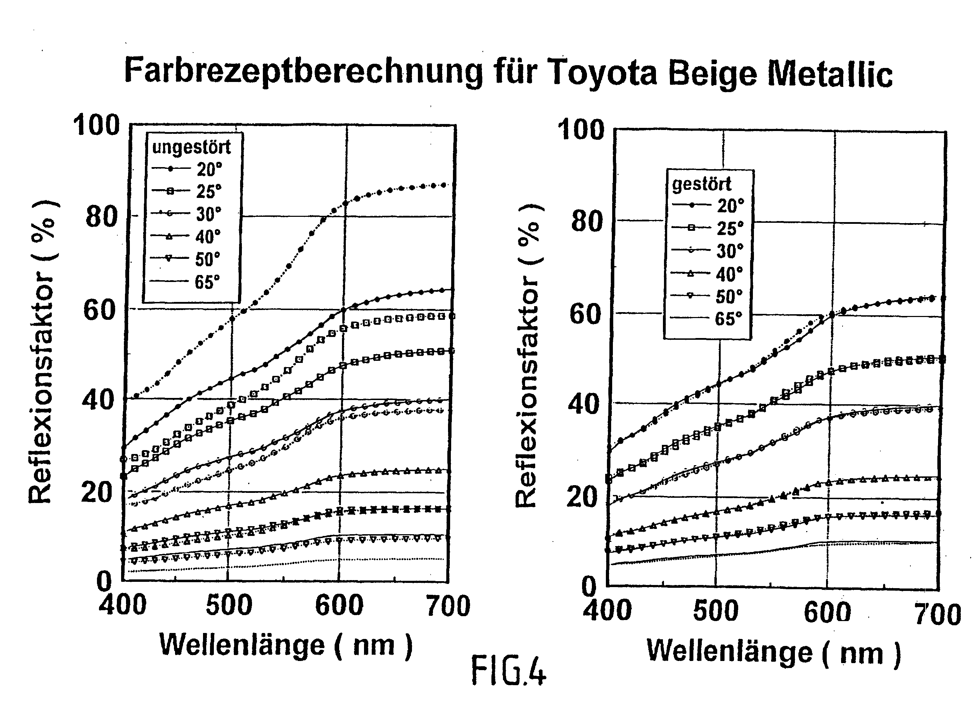

Abb. 4: Experimentell gemessene und berechnete Reflexionsspektren für den in Abb. 3 dargestellten beigefarbenen Effektfarbton für den Fall ungestörter (links) und gestörter Teilchentopologie (rechts). Parameter der Kurvenscharen ist der Beobachtungswinkel. Wegen der besseren Übersicht sind nur die Spektren einiger Winkel abgebildet. In beiden Fällen sind die gemessenen Spektren durchgezogen und die berechneten Spektren gestrichelt dargestellt worden.

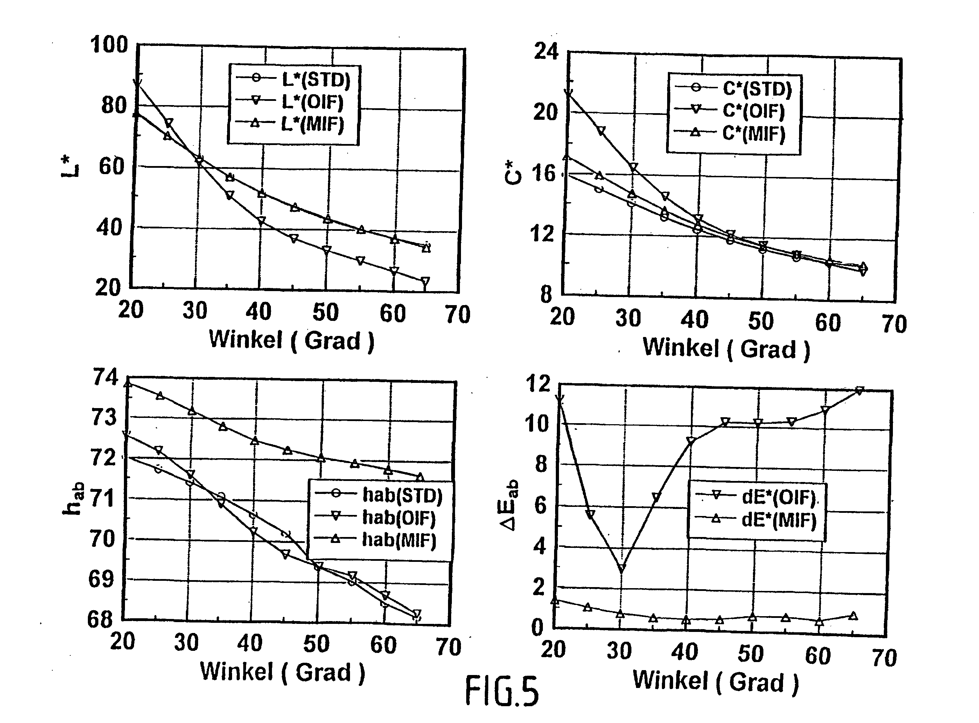

Abb. 5: Winkelabhängigkeit der farbmetrischen Maßzahlen für den in Abb. 3 dargestellten beigefarbenen Effektfarbton sowie der gerechneten Farbrezepte für die Fälle ungestörter und gestörter Teilchentopologie.

STD - Standard

OIF - ohne inerten Füllstoff

MIF - mit inertem Füllstoff

Das erfindungsgemäße Verfahren zur Farbrezeptberechnung soll an der Nachstellung eines für den Automobilbereich typischen Effektfarbtones demonstriert werden. Es liegt eine Farbtonvorlage mit einen beigefarbenen Effektfarbton (Toyota Beige Metallic) vor, zu der eine entsprechende Rezeptausarbeitung erfolgen soll.

Zunächst wird die Farbtonvorlage mit einem Goniospektralphotometer vermessen. Abb. 3 zeigt die gemessene Reflexionsfläche für den Wellenlängenbereich 400 nm ≤ λ ≤ 700 nm und den Winkelbereich 20° ≤ ε ≤ 65° für den Fall senkrechter Einstrahlung. Wie Abb. 3 zu entnehmen ist, weist dieser beigefarbene Effektfarbton eine deutliche Winkelvariation auf. Als effektgebende Komponente ist hier ein brillantes Al-Pigment mit sehr großem Winkelgang verwendet worden. Für die Nachstellung werden zusätzlich ein gelbes Absorptionspigment und Ruß vorgegeben. An Hand der optischen Materialparameter der vorgegebenen Pigmente kann nun die Reflexionsfläche simuliert werden. In der Simulation der Reflexionsfläche zeigt sich jedoch (siehe Abb. 4 links), daß sich das Al-Pigment im verwendeten Lacksystem besser orientiert als in dem nachzustellenden Farbmuster. Dadurch wird die Nachstellung im glanzwinkelnahen Bereich zu hell und im glanzfernen Bereich zu dunkel. Dieser Fall ist günstig, da der Effekt im eigenen Bindemittelsystem gebrochen werden muß, um die Reflexionseigenschaften des Referenzfarbtons zu erreichen. Durch Berücksichtigung der dem vorgegebenen Al-Pigment zugehörigen gestörten Pseudokomponente kann diese Diskrepanz nahezu vollständig beseitigt werden. Aus Abb. 4 rechts ist ersichtlich, daß nun die Reflexionsflächen von Farbtonvorlage und Simulation sehr gut übereinstimmen. Diese deutliche Verbesserung des Simulationsergebnisses spiegelt sich auch in den farbmetrischen Daten beider berechneter Rezepte wieder, die in Abb. 5 zusammengestellt worden sind. Ohne Störung der Teilchentopologie liegt der mittlere Farbabstand des ausgemischten Erstrezeptes bei $<\Delta E^*_{ab}> \approx 8.9$ CIELAB-Einheiten, der durch Einbeziehung der topologiegestörten Variante in die Rechnung erheblich verkleinert werden kann $<\Delta E^*_{ab}> \approx 0.8$. Im letzteren Fall muß lediglich auf Grund der bestehenden Bunttonwinkeldifferenz die Buntkomponente (Gelb) des Rezeptes nachjustiert werden. Die rechnerischen farbmetrischen Ergebnisse entsprechen denen der jeweiligen ausgemischten Formel.

In der nachfolgenden Tabelle sind die gerechneten Rezeptierergebnisse (ermittelte Konzentration aller Komponenten) für den beigefarbenen Effektfarbton (Farbtonvorlage) für den Fall ungestörter Pigmenttopologie und den Fall gestörter Pigmenttopologie zusammengefaßt. Beide Rezepte enthalten als pigmentäre Bestandteile Aluminiumpigmente, Gelbpigmente und Ruß. Bei dem topologiesensitiven Rezept ($C_{gestört}$) kommt noch der die Orientierung des Aluminiumpigmentes beeinflussende Füllstoff hinzu.

|  | $C_{ungestört}$ (%) | $C_{gestört}$ (%) |
|---|---|---|
| Al-Pigment | 66,21 | 60,00 |
| Gelb-Pigment | 19,16 | 15,21 |
| Ruß | 14,64 | 16,59 |
| Füllstoff | -------- | 8,21 |

**Patentansprüche**

1.    Verfahren zur Farbrezeptberechnung pigmentierter Effektfarbtöne, **dadurch gekennzeichnet, daß**

   i) für jedes einem Färbemittelsystem zugrundeliegende Pigment eine Eichstaffel erstellt wird und die zugehörigen Reflexionsfaktoren experimentell ermittelt werden,

   ii) aus den gemessenen Reflexionsfaktoren für jedes dem Färbemittelsystem zugrundeliegende Pigment unter Verwendung eines Strahlungstransportmodells zur Beschreibung der Lichtdiffusion in partikulären Medien die optischen Materialparameter bestimmt werden,

   iii) aus allen dem Färbesystem zugrundeliegenden plättchenförmigen Effektpigmenten und jeweils einer fixen Menge eines oder mehrerer koloristisch inerter topologiebeeinflußender Füllstoffe sogenannte Pseudopigmente gebildet werden, von denen über eine Eichstaffel ebenfalls die optischen Materialparameter bestimmt werden,

   iv) und bei Vorgabe von Rezeptkomponenten bzw. Pigmenten und/oder zugehörigen Pseudopigmenten aus einem Färbemittelsystem anhand der optischen Materialparameter unter Verwendung eines geeigneten Strahlungstransportmodells zur Beschreibung der Lichtdiffusion in partikulären Medien die Reflexionsspektren eines nachzustellenden Effektfarbtons rechnerisch simuliert werden, wobei sich für jedes Pigment, jedes Pseudopigment und den topologiebeeinflussenden Füllstoff die zugehörige Menge ergibt.

2.    Verfahren zur Farbrezeptberechnung pigmentierter Effektfarbtöne gemäß Anspruch 1, **dadurch gekennzeichnet,**

# EP 0 931 247 B1

**daß** das Strahlungstransportmodell die azimuthunabhängige Form der Strahlungstransportgleichung ist.

3. Verfahren zur Farbrezeptberechnung pigmentierter Effektfarbtöne gemäß Ansprüchen 1 oder 2, **dadurch gekennzeichnet, daß** zur Ermittlung der optischen Materialparameter der Reflexionsfaktor oder der Strahldichtefaktor bei verschiedenen Beleuchtungs- und Beobachtungsgeometrien im interessierenden Spektralbereich bestimmt werden.

## Claims

1. Process for calculating a colour formulation for pigmented special-effect shades, **characterised in that**

   i) a grading for each pigment on which a colorant system is based is created, and the associated reflection factors are determined experimentally,

   ii) optical material parameters are determined from the measured reflection factors for each pigment on which the colorant system is based, using a radiation transport model to describe the diffusion of light in particulate media,

   iii) pseudopigments whose optical material parameters are likewise determined by way of a grading are formed, from all the platelet special-effect pigments on which the colorant system is based and in each case a fixed quantity of one or more colouristically inert topology-influencing fillers,

   iv) and, when the formulation components and pigments and/or associated pseudopigments from a colorant system are specified, the reflection spectra of a special-effect shade which is to be re-adjusted are simulated mathematically by reference to the optical material parameters, using a suitable radiation transport model to describe the diffusion of light in particulate media, with the associated quantity resulting in respect of each pigment, each pseudopigment and the topology-influencing filler.

2. Process for calculating a colour formulation for pigmented special-effect shades according to claim 1, **characterised in that** the radiation transport model is the azimuth-independent form of the radiation transport equation.

3. Process for calculating a colour formulation for pigmented special-effect shades according to claims 1 or 2, **characterised in that** the reflection factor or the beam density factor are determined at different illumination and observation geometries in the spectral region which is of interest, in order to determine the optical material parameters.

## Revendications

1. Procédé de calcul de nuances de couleur de pigments, **caractérisé en ce que**

   i) chaque couleur est déterminée par un système de pigments de base et par des facteurs de réflexion correspondant à ces pigments, qui sont obtenus en utilisant des méthodes expérimentales,

   ii) les facteurs de réflexion mesurés pour chaque pigment fondamental du système coloré sont utilisés dans un modèle de transport de rayonnement à la base de la description de diffusion de la lumière dans un milieu particulier **caractérisé par** les paramètres optiques des matériaux,

   iii) les paramètres optiques sont déterminés pour tous les systèmes de coloration à base de pigments, et également pour tous les systèmes contenant plusieurs ou un grand nombre fixé de matériaux de remplissages avec sans effet de topologie des matériaux sur la coloration, ces matériaux étant appelés pseudopigments,

   iv) et les paramètres optiques des matériaux, par exemple, des pigments et/ou pseudo-pigments contenus dans un système coloré, sont simulés par des calculs utilisant un modèle de transport de rayonnement applicable à la description de la diffusion de la lumière dans des milieu particuliers, des spectres de réflexion et des effets de coloration avec des nuances naturelles, **caractérisé en ce que** tous les composants de la matière, chaque pigment, chaque pseudo-pigment et chaque matière de remplissage qui influent sur la topologie

7

donnent un effet.

2. Procédé de calcul de nuances de couleur de pigments selon la revendication 1, **caractérisé en ce que** le modèle de transport de rayonnement utilise l'équation de transport de rayonnement sous forme dépendant de l'azimuth.

3. Procédé de calcul de nuances de couleur de pigments selon les revendication 1 à 2, **caractérisé en ce que** le facteur de réflexion et le facteur de densité de rayonnement dépendant de l'intensité de la lumière et de la géométrie d'observation dans le domaine spectral intéressant sont déterminés par des recherches de paramètres optiques des matériaux.

FIG.1

gute Orientierung

schmale Reflexionsindikatrix
→ starker Flop

schlechte Orientierung

breite Reflexionsindikatrix
→ geringer Flop

Konventionelles Al-Pigment
—△— gut orientiert
—▽— schlecht orientiert

L*

Winkel ( Grad )

FIG. 2

FIG.3

Farbrezeptberechnung für Toyota Beige Metallic

FIG.4

Reflexionsfaktor ( % )

Wellenlänge ( nm )

gestört
20°
25°
30°
40°
50°
65°

ungestört
20°
25°
30°
40°
50°
65°

FIG.5

EP 0 931 247 B1